# FASCICULE DE BREVET EUROPEEN

(11) **EP 2 312 227 B1**
(45) Date de publication et mention de la délivrance du brevet: **04.11.2015**
(21) Numéro de dépôt: 10178210.0
(22) Date de dépôt: 22.09.2010
(51) Int. Cl.: F24F 5/00, F24F 12/00, F25B 29/00, F25B 13/00, F24D 17/00, F24D 17/02, F25B 41/04

(54) **Installation de ventilation mécanique contrôlée de type double flux thermodynamique réversible avec production d'eau chaude sanitaire**
Mechanisch gesteuerte reversible Zweistrom-Ventilationsanlage und Brauchwarmwassererzeugung
Controlled mechanical ventilation device of the type with reversible double thermodynamic flow with domestic hot water production

(30) Priorité: 30.09.2009 FR 0956802
(43) Date de publication de la demande: 20.04.2011
(73) Titulaire: ALDES AERAULIQUE, 69200 Venissieux Cedex (FR)
(72) Inventeur: Labaume, Damien, 31570 Preserville (FR); Saumade, Hervé, 12100 Creissels (FR); Bernier, Jacques, 35500 Poce Les Bois (FR)
(74) Mandataire: Verriest, Philippe

(56) Documents cités:
- EP-A2- 0 134 015
- WO-A1-00/32994
- WO-A1-00/73716
- FR-A1- 2 922 632
- US-A- 5 243 825

## Description

L'invention concerne une installation de ventilation mécanique contrôlée de type double flux thermodynamique réversible avec production d'eau chaude sanitaire.

Il est connu depuis longtemps qu'il est nécessaire de ventiler un bâtiment, par exemple une habitation, afin d'améliorer la conservation du bâtiment, l'évacuation des pollutions spécifiques liées à la présence des occupants, l'évacuation des pollutions spécifiques liées au bâtiment lui-même et l'évacuation des pollutions spécifiques liées aux matériels ou machines utilisées dans ces locaux.

Par ailleurs, la maîtrise de cette ventilation est nécessaire pour limiter les déperditions thermiques liées à ce renouvellement de l'air.

Compte tenu de l'évolution actuelle des bâtiments, les besoins de chauffage tendent à diminuer fortement. En effet, les progrès sur les différents matériaux (isolation, vitrage, pont thermique,...) ont permis de réduire de manière importante les déperditions thermiques des habitations. Par ailleurs, dans ce type d'habitat, de façon à diminuer les déperditions par renouvellement d'air, la ventilation mise en place est généralement de type double flux. Un réseau aéraulique est destiné à l'insufflation de l'air dans les pièces principales et un deuxième réseau assure l'extraction de l'air dans les pièces techniques dite « humides ».

De plus, on constate que, dans les habitations dites «Basse Consommation», les besoins d'eau chaude sanitaire (ECS) deviennent le poste le plus consommateur d'énergie.

Dans les systèmes de ventilation mécanique contrôlée (VMC) à double flux, on distingue les installations présentées ci-après.

La ventilation de type double flux sans échangeur est constituée de deux ventilateurs, un servant à l'extraction, l'autre servant à l'insufflation d'air. Les différents flux n'échangent pas de chaleur l'un avec l'autre.

La ventilation de type double flux statique utilise un échangeur statique permettant de récupérer les calories de l'air extrait pour les céder à l'air insufflé.

La ventilation de type double flux thermodynamique utilise un échangeur thermodynamique de type pompe à chaleur, permettant de récupérer les calories de l'air extrait pour les céder à l'air insufflé. Ce système a l'avantage de contribuer tout ou partie au chauffage de l'air insufflé. La température de l'air insufflé peut alors être supérieure à la température de l'air extrait. Par ailleurs, une telle installation est généralement réversible de manière à permettre de faire du rafraîchissement en été, en refroidissant l'air insufflé et en réchauffant l'air extrait.

Une telle installation comporte, de manière classique, un circuit de circulation de fluide, équipé d'un condenseur/évaporateur échangeant de la chaleur avec un circuit d'insufflation d'air, destiné à l'insufflation d'air à l'intérieur d'un bâtiment, d'un évaporateur/condenseur échangeant de la chaleur avec un circuit d'extraction d'air, destiné à l'extraction d'air du bâtiment vers l'extérieur, un compresseur, un détendeur, et une vanne permettant de diriger le fluide dans un sens ou dans l'autre à l'intérieur du circuit.

En été, en fonctionnement réversible, la machine rejette des calories à l'extérieur. Par ailleurs, à la mi-saison, dans le cas des installations de type double flux thermodynamique, le compresseur est arrêté et son potentiel n'est pas exploité.

Il existe des dispositifs assurant la ventilation, la production d'eau chaude pour le chauffage et l'eau chaude sanitaire. Ces dispositifs récupèrent les calories de l'air extrait pour produire l'eau chaude sanitaire et assurer tout ou partie du chauffage.

L'inconvénient de ces dispositifs est de ne pas proposer, lorsque la température de consigne de l'eau chaude sanitaire est atteinte, du rafraîchissement, c'est-à-dire de fonctionnement en mode réversible, et par conséquent ces dispositifs rejettent des calories vers l'extérieur lorsque la machine est arrêtée.

L'état de la technique peut également être illustré par l'enseignement de la demande de brevet FR 2 922 632 A1, qui divulgue une installation de ventilation réversible apte à produire de l'eau chaude sanitaire tout en limitant au maximum la consommation d'énergie. Une telle installation comporte un circuit primaire de circulation d'un premier fluide, équipé d'un condenseur/évaporateur échangeant de la chaleur avec un circuit d'insufflation d'air, d'un évaporateur/condenseur échangeant de la chaleur avec un circuit d'extraction d'air, d'un compresseur, d'un détendeur, et d'une vanne quatre voies permettant de diriger le premier fluide dans un sens ou dans l'autre à l'intérieur du circuit primaire. Ce circuit primaire est également équipé d'un échangeur thermique disposé entre la sortie du compresseur et la vanne quatre voies, l'échangeur thermique étant relié à un circuit secondaire à l'intérieur duquel circule un fluide destiné à chauffer un récepteur, comme par exemple un ballon d'eau chaude sanitaire.

Cette installation permet de réaliser différents modes de fonctionnement, à savoir le chauffage seul de l'air insufflé dans le bâtiment, le chauffage de l'air insufflé dans le bâtiment combiné au chauffage de l'eau chaude sanitaire, le chauffage seul de l'eau chaude sanitaire, le refroidissement seul de l'air insufflé dans le bâtiment, le refroidissement de l'air insufflé dans le bâtiment combiné au chauffage de l'eau chaude sanitaire avec priorité au refroidissement de l'air insufflé.

Cependant, cette installation présente un certain nombre d'inconvénients, le premier étant qu'il ne permet pas de réaliser un mode de refroidissement de l'air insufflé dans le bâtiment combiné au chauffage de l'eau chaude sanitaire avec priorité au chauffage de l'eau chaude sanitaire. En effet, cette installation ne permet pas de by-passer ou shunter l'évaporateur/condenseur lorsque celui fonctionne en mode condenseur pour permettre de réaliser un tel mode avec priorité au chauffage de l'eau chaude sanitaire.

Le deuxième inconvénient de cette installation intervient lorsque cette dernière est en mode dit « mi-saison », à savoir de chauffage seul de l'eau chaude sanitaire. En effet, dans ce mode « mi-saison », le condenseur/évaporateur est by-passé ou shunté au moyen de deux vannes disposées respectivement en amont de l'entrée/sortie du condenseur/évaporateur et sur une branche de dérivation conçue pour shunter le condenseur/évaporateur. La demanderesse a en effet observé, dans ce mode « mi-saison », une migration du premier fluide, ou fluide frigorigène, qui vient se stocker sous forme liquide dans la totalité du volume disponible dans le condenseur/évaporateur qui est by-passé ou inutilisé. Ainsi, d'un point de vue technique, cette installation nécessite une charge importante en fluide frigorigène, de l'ordre du double du volume nécessaire pour une installation sans le circuit secondaire de chauffage de l'eau chaude sanitaire, pour pouvoir pallier la migration du fluide dans le condenseur/évaporateur.

Le but de la présente invention est de proposer une installation réversible apte à réaliser les différents modes de fonctionnement susmentionnés, dont le mode de refroidissement de l'air insufflé dans le bâtiment combiné au chauffage de l'eau chaude sanitaire avec priorité au chauffage de l'eau chaude sanitaire, sans nécessiter une charge de fluide frigorigène importante.

A cet effet, l'invention concerne une installation de ventilation mécanique contrôlée de type double flux thermodynamique réversible, comportant un circuit primaire de circulation d'un premier fluide présentant une première et une deuxième boucles reliées entre elle par une vanne quatre voies d'inversion de cycle permettant de diriger le premier fluide dans un sens ou dans l'autre à l'intérieur de la première boucle du circuit primaire, dans laquelle :
- la première boucle est équipée d'un condenseur/évaporateur échangeant de la chaleur avec un circuit d'insufflation d'air, destiné à l'insufflation d'air à l'intérieur d'un bâtiment, d'un premier détendeur du type bidirectionnel agencé pour laisser le passage du premier fluide dans les deux sens de circulation de la première boucle, d'une première vanne disposée entre la vanne quatre voies et le condenseur/évaporateur, et d'un évaporateur/condenseur échangeant de la chaleur avec un circuit d'extraction d'air, destiné à l'extraction d'air du bâtiment vers l'extérieur, disposé entre le premier détendeur et la vanne quatre voies ;
- la deuxième boucle est équipée d'un compresseur et d'un échangeur thermique disposé entre la sortie du compresseur et la vanne quatre voies, l'échangeur thermique étant destiné à être relié à des moyens de chauffage d'un second fluide, notamment d'eau chaude sanitaire,
   ladite installation étant remarquable en ce qu'elle comprend en outre :
- une deuxième vanne disposée sur la première boucle du circuit primaire entre l'évaporateur/condenseur et la vanne quatre voies ;
- une branche de dérivation comportant une première extrémité raccordée à la deuxième boucle, entre la sortie de l'échangeur thermique et la vanne quatre voies, et une seconde extrémité raccordée à la première boucle, entre le premier détendeur et l'évaporateur/condenseur ; et
- un deuxième détendeur disposé sur la branche de dérivation, ledit deuxième détendeur étant agencé pour laisser le passage du premier fluide uniquement dans le sens allant de la première vers la deuxième extrémité de la branche de dérivation.

Ainsi, cette installation permet de réaliser tous les modes de fonctionnement décrits ci-dessus, dont le mode de refroidissement de l'air insufflé dans le bâtiment combiné au chauffage de l'eau chaude sanitaire avec priorité au chauffage de l'eau chaude sanitaire, en permettant de contourner, autrement dit de shunter ou by-passer, ou pas l'évaporateur/condenseur et le condenseur/évaporateur, par le contrôle de l'ouverture/fermeture des première et deuxième vannes.

En outre, l'emploi des deux détendeurs permet de limiter la charge du premier fluide dans le circuit primaire en limitant au moins partiellement la migration du premier fluide vers le condenseur/évaporateur lorsque ce dernier est shunté/by-passé, et en limitant au moins partiellement la migration du premier fluide vers l'évaporateur/condenseur lorsque ce dernier est shunté/by-passé. En effet, étant donné la disposition de ces deux détendeurs dans le circuit primaire et leurs caractéristiques respectives, le deuxième détendeur permet de mettre sous basse-pression une entrée/sortie de l'évaporateur/condenseur shunté ou du condenseur/évaporateur shunté, suivant le mode de fonctionnement, et éviter ainsi une aspiration de premier fluide frigorigène dans cet élément shunté, permettant au final de limiter la charge de fluide frigorigène nécessaire dans le circuit primaire.

Les première et deuxième vannes peuvent être du type vanne commandée ou électrovanne.

Selon une possibilité de l'invention, le premier détendeur et le deuxième détendeur sont conçus pour que :
- lorsque la première et la deuxième vannes sont ouvertes, le premier détendeur est ouvert et le deuxième détendeur est fermé de sorte que le premier fluide circule dans la première boucle via le premier détendeur ;
- lorsque la première vanne est fermée et la deuxième vanne est ouverte, le premier détendeur est ouvert et le deuxième détendeur est ouvert de sorte que le premier fluide circule dans la branche de dérivation via le deuxième détendeur en direction de l'évaporateur/condenseur sans passer par le premier détendeur ;
- lorsque la première vanne est ouverte et la deuxième vanne est fermée, le premier détendeur est ouvert et le deuxième détendeur est ouvert de sorte que le premier fluide circule dans la branche de dérivation via le deuxième détendeur en direction du condenseur/évaporateur via le premier détendeur.

Ces trois situations couvrent tous les modes de fonctionnement de l'installation, et en particulier le mode de refroidissement de l'air insufflé dans le bâtiment combiné au chauffage de l'eau chaude sanitaire avec priorité au chauffage de l'eau chaude sanitaire lorsque la première vanne est ouverte et la deuxième vanne est fermée (évaporateur/condenseur shunté).

Dans une réalisation particulière, le premier détendeur est du type détendeur électronique à section variable.

Un tel premier détendeur électronique est particulièrement avantageux pour réguler la section de ce dernier et ainsi contrôler les différents modes de fonctionnement de l'installation.

Selon une caractéristique, le premier détendeur est du type détendeur débrayable conçu pour être commandé dans une position débrayée ouverte.

Cette caractéristique permet de commander le premier détendeur dans une position ouverte, ou le passage du premier fluide à travers le premier détendeur, afin de réaliser facilement le mode de refroidissement de l'air insufflé dans le bâtiment combiné au chauffage de l'eau chaude sanitaire avec priorité au chauffage de l'eau chaude sanitaire.

Selon une autre caractéristique, le premier détendeur est muni de trois sondes de température, à savoir une première sonde disposée sur la première boucle entre le condenseur/évaporateur et le premier détendeur, une deuxième sonde disposée sur la première boucle entre le premier détendeur et l'évaporateur/condenseur, et une troisième sonde disposée sur la deuxième boucle entre l'entrée du compresseur et la vanne quatre voies.

Cette caractéristique permet de contrôler aisément et efficacement le fonctionnement du premier détendeur pour la mise en oeuvre des divers modes de fonctionnement de l'installation.

Dans une variante de réalisation, le premier détendeur est du type détendeur thermostatique, et l'installation comprend un troisième détendeur du type détendeur thermostatique équipant une sous-branche de dérivation reliant la branche de dérivation à la première boucle entre le premier détendeur et le condenseur/évaporateur.

Ce troisième détendeur permet avantageusement, dans le cas d'un premier détendeur thermostatique, de détendre le premier liquide frigorigène sortant de l'échangeur thermique dans un mode de refroidissement de l'air insufflé dans le bâtiment combiné au chauffage de l'eau chaude sanitaire avec priorité au chauffage de l'eau chaude sanitaire, permettant ainsi un bon fonctionnement de l'installation.

Dans un mode de réalisation de l'invention, le deuxième détendeur est du type détendeur thermostatique à section variable.

Un tel deuxième détendeur thermostatique présente l'avantage d'être peu coûteux tout en garantissant le bon fonctionnement de l'installation dans les divers modes de fonctionnement de l'installation.

Dans une variante de réalisation de l'invention le deuxième détendeur est du type détendeur électronique à section variable.

Un tel deuxième détendeur électronique présente l'avantage de permettre un réglage plus précis de l'évaporateur et ainsi une diminution de la température de surchauffe à l'évaporateur du deuxième détendeur, pour au final diminuer la consommation du compresseur et donc augmenter le rendement de l'installation.

Selon une possibilité de l'invention, le deuxième détendeur est muni d'au moins une sonde de température disposée sur la deuxième boucle entre l'entrée du compresseur et la vanne quatre voies.

De façon avantageuse, le premier détendeur présente une première température de surchauffe à l'évaporateur et le deuxième détendeur présente une deuxième température de surchauffe à l'évaporateur, et en ce que la première température de surchauffe à l'évaporateur est inférieure à la deuxième température de surchauffe à l'évaporateur.

En jouant sur la température de surchauffe à l'évaporateur des deux détendeurs, il est ainsi possible de contrôler efficacement le fonctionnement de l'installation dans les divers modes de fonctionnement de l'installation.

Par exemple, la première température de surchauffe à l'évaporateur est de l'ordre de 4 à 5 kelvins et la deuxième température de surchauffe à l'évaporateur est de l'ordre de 6 à 8 kelvins.

De toute façon, l'invention sera mieux comprise à l'aide de la description qui suit, en référence au dessin schématique annexé représentant, à titre d'exemple, une forme d'exécution de cette installation.
Figure 1 est une vue schématique d'une première installation conforme à l'invention, avec l'illustration des circuits d'insufflation d'air et d'extraction d'air ;
Figure 2 est une vue correspondant à la figure 1, en mode de chauffage de l'air insufflé dans le bâtiment combiné au chauffage de l'eau chaude sanitaire ;
Figure 3 est une vue correspondant à la figure 1, en mode de chauffage seul de l'air insufflé dans le bâtiment ;
Figure 4 est une vue correspondant à la figure 1, en mode de chauffage seul de l'eau chaude sanitaire ;
Figure 5 est une vue correspondant à la figure 1, en mode de refroidissement seul de l'air insufflé dans le bâtiment ;
Figure 6 est une vue correspondant à la figure 1, en mode de refroidissement de l'air insufflé dans le bâtiment combiné au chauffage de l'eau chaude sanitaire avec priorité au refroidissement de l'air insufflé
Figure 7 est une vue correspondant à la figure 1, en mode de refroidissement de l'air insufflé dans le bâtiment combiné au chauffage de l'eau chaude sanitaire avec priorité au chauffage de l'eau chaude sanitaire
Figure 8 est une vue schématique d'une seconde installation conforme à l'invention, avec l'illustration des circuits d'insufflation d'air et d'extraction d'air.

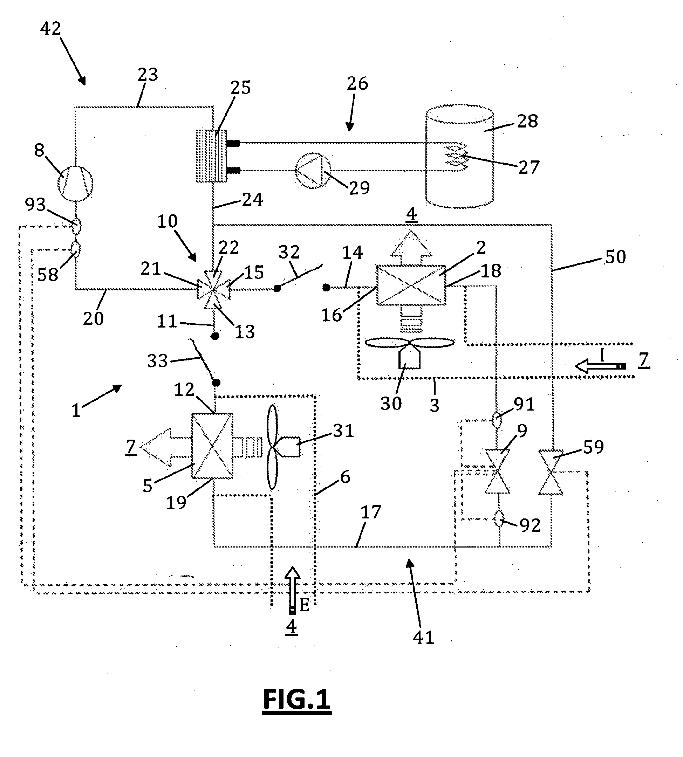

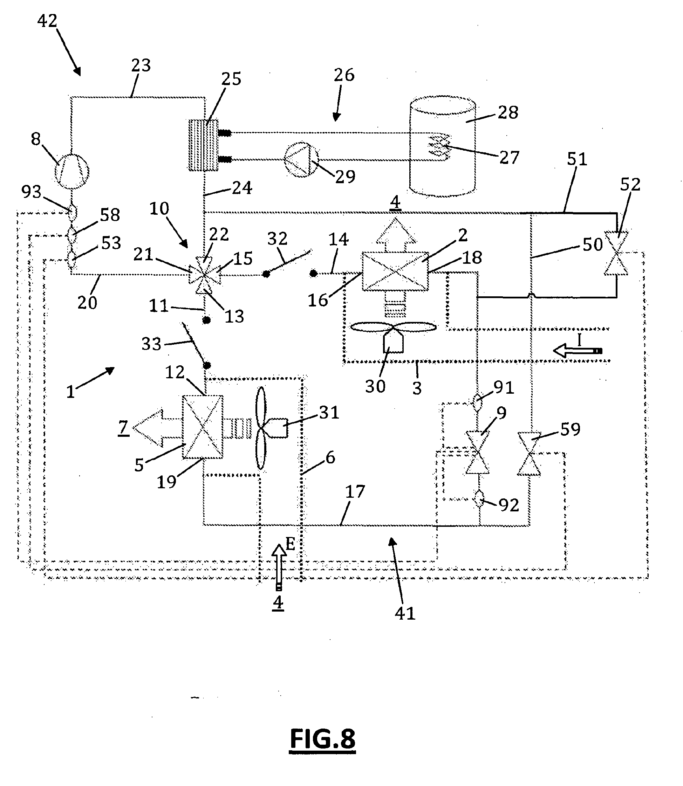

Les figures 1 et 8 illustrent respectivement une première et une seconde installations de ventilation mécanique contrôlée de type double flux thermodynamique réversible selon l'invention.

De manière générale, l'installation comporte un circuit primaire 1 de circulation d'un premier fluide du type fluide frigorigène. Ce circuit primaire 1 présente deux boucles de circulation du premier fluide, à savoir une première boucle 41 et une deuxième boucles 42, reliées entre elles par une vanne quatre voies 10 d'inversion de cycle permettant de diriger le premier fluide dans un sens ou dans l'autre à l'intérieur de la première boucle 41 du circuit primaire 1.

La première boucle 41 est équipée de :
- un condenseur/évaporateur 2 échangeant de la chaleur avec un circuit d'insufflation d'air 3, destiné à l'insufflation d'air à l'intérieur 4 d'un bâtiment ;
- un premier détendeur 9 ;
- une première vanne 32, du type vanne commandée ou électrovanne, disposée entre la vanne quatre voies 10 et le condenseur/évaporateur 2 ;
- un évaporateur/condenseur 5 échangeant de la chaleur avec un circuit d'extraction d'air 6, destiné à l'extraction d'air du bâtiment vers l'extérieur 7, disposé entre le premier détendeur 9 et la vanne quatre voies 10 ; et
- une deuxième vanne 33, du type vanne commandée ou électrovanne, disposée entre l'évaporateur/condenseur 5 et la vanne quatre voies 10.

Plus particulièrement, la première boucle 41 du circuit primaire 1 relie une première voie 13 de la vanne quatre voies 10 à une seconde voie 15 de la vanne quatre voies 10, et elle se décompose en :
- une première branche 11, équipée de la deuxième vanne 33, reliant la sortie/entrée 12 de l'évaporateur/condenseur 5 à la première voie 13 de la vanne quatre voies 10 ;
- une seconde branche 14, équipée de la première vanne 32, reliant la seconde voie 15 de la vanne quatre voies 10 à l'entrée/sortie 16 du condenseur/évaporateur 2 ; et
- une troisième branche 17 équipée du premier détendeur 9 et reliant la sortie/entrée 18 du condenseur/évaporateur 2 à l'entrée/sortie 19 de l'évaporateur/condenseur 5.

La deuxième boucle 42 est équipée de :
- un compresseur 8 ;
- un échangeur thermique 25 disposé entre la sortie du compresseur 8 et la vanne quatre voies 10, l'échangeur thermique 25 étant relié à des moyens de chauffage d'un second fluide, de préférence d'eau chaude sanitaire.

Plus particulièrement, la deuxième boucle 42 du circuit primaire 1 relie une troisième voie 21 de la vanne quatre voies 10 à une quatrième voie 22 de la vanne quatre voies 10, et elle se décompose en :
- une quatrième branche 20 reliant la troisième voie 21 de la vanne quatre voies 10 à l'entrée du compresseur 8 ;
- une cinquième branche 23 reliant la sortie du compresseur 8 et l'entrée de l'échangeur thermique 25 ; et
- une sixième branche 24 reliant la sortie de l'échangeur thermique 25 et la quatrième voie 22 de la vanne quatre voies 10.

Le circuit primaire 1 comporte de plus une branche de dérivation 50 équipée d'un deuxième détendeur 59 et conçue pour dériver au moins une partie du premier fluide entre la sixième branche 24 de la deuxième boucle 42 et la troisième branche 17 de la première boucle 41, de manière à shunter, au moins en partie, le condenseur/évaporateur 2 ou l'évaporateur/condenseur 5.

Plus particulièrement, la branche de dérivation 50 comporte deux extrémités opposées, à savoir :
- une première extrémité raccordée à la sixième branche 24 de la deuxième boucle 42, entre la sortie de l'échangeur thermique 25 et la quatrième voie 22 de la vanne quatre voies 10 ; et
- une seconde extrémité raccordée à la troisième branche 17 de la première boucle 41, entre le premier détendeur 9 et l'entrée/sortie 19 de l'évaporateur/condenseur 5.

Le condenseur/évaporateur 2 est apte à fonctionner en tant que condenseur en mode normal et en tant qu'évaporateur en mode réversible, en fonction du sens de circulation du premier fluide à l'intérieur de la première boucle 41. De même, l'évaporateur/condenseur 5 est apte à fonctionner en tant qu'évaporateur en mode normal et en tant que condenseur en mode réversible, en fonction du sens de circulation du premier fluide à l'intérieur de la première boucle 41.

Pour rappel, un condenseur forme une source chaude dans lequel le premier fluide frigorigène libère sa chaleur au fluide secondaire (air insufflé dans l'intérieur du bâtiment ou air extrait du bâtiment vers l'extérieur) en passant de l'état gazeux à l'état liquide (condensation). À la sortie du condenseur, le premier fluide frigorigène voit sa température fortement diminuer. Inversement, un évaporateur forme une source froide dans lequel le premier fluide frigorigène récupère de la chaleur au fluide secondaire (air insufflé dans l'intérieur du bâtiment ou air extrait du bâtiment vers l'extérieur) en passant de l'état liquide à l'état gazeux (évaporation). À la sortie de l'évaporateur, le fluide est généralement tempéré (environ 5°C) et à faible pression.

Le premier détendeur 9 est du type bidirectionnel agencé pour laisser le passage du premier fluide dans les deux sens de circulation de la première boucle 41.

Dans le premier mode de réalisation représenté à la figure 1, le premier détendeur 9 est du type détendeur électronique à section variable et débrayable conçu pour être commandé dans une position débrayée ouverte.

Le premier détendeur 9 électronique, qui a pour fonction de réduire la pression du fluide frigorigène en phase liquide, permet un réglage précis de l'évaporateur et présente une première température de surchauffe à l'évaporateur de l'ordre de 4 à 5 kelvins, ce qui diminuera la consommation du compresseur décrit ci-après. L'avantage du détendeur électronique est de pouvoir bénéficier de l'intelligence de la régulation numérique : adapter son point de fonctionnement en fonction de divers paramètres.

Le premier détendeur 9 électronique est muni de trois sondes de température, à savoir :
- une première sonde 91 disposée sur la troisième branche 17 de la première boucle 41, entre la sortie/entrée 18 du condenseur/évaporateur 2 et le premier détendeur 9 ;
- une deuxième sonde 92 disposée sur la troisième branche 17 de la première boucle 41, entre le premier détendeur 9 et l'entrée/sortie 19 de l'évaporateur/condenseur 5 ; et
- une troisième sonde 93 disposée sur la quatrième branche 20 de la deuxième boucle 42, entre l'entrée du compresseur 8 et la troisième voie 21 de la vanne quatre voies 10.

Dans le second mode de réalisation représenté à la figure 8, le premier détendeur 9 est du type détendeur thermostatique. Dans ce cas, il convient de prévoir un troisième détendeur 52 du type thermostatique équipant une sous-branche de dérivation 51 reliant la branche de dérivation 50 à la première boucle 41 entre le premier détendeur 9 et le condenseur/évaporateur 2.

Cette sous-branche de dérivation 51 comporte deux extrémités opposées, à savoir :
- une première extrémité raccordée à la branche de dérivation 50, entre la sortie de l'échangeur thermique 25 et le deuxième détendeur 59 ; et
- une seconde extrémité raccordée à la troisième branche 17 de la première boucle 41, entre le premier détendeur 9 et la sortie/entrée 18 du condenseur/évaporateur 2.

Ce troisième détendeur thermostatique 52 est muni d'au moins une sonde de température 53 (ou bulbe) disposée sur la deuxième boucle 42 entre l'entrée du compresseur 8 et la vanne quatre voies 10.

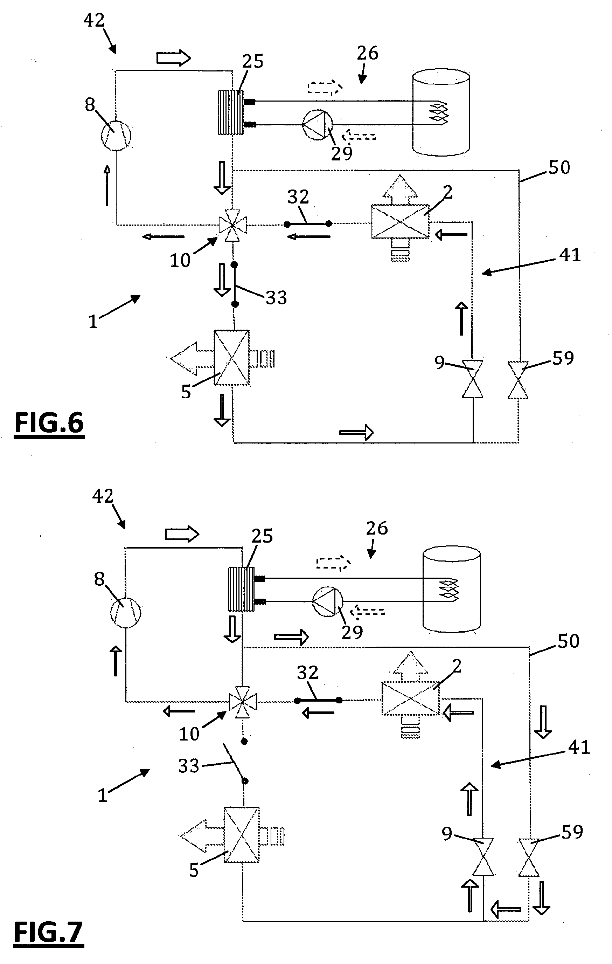

Ce troisième détendeur thermostatique 52 est destiné à, dans un mode de refroidissement de l'air insufflé dans le bâtiment combiné au chauffage de l'eau chaude sanitaire avec priorité au chauffage de l'eau chaude sanitaire tel que représenté sur la figure 7, détendre le premier liquide frigorigène sortant de l'échangeur thermique 25, vers l'entrée/sortie 16 du condenseur/évaporateur 2 devenu évaporateur car la perte de pression occasionnée par le premier détendeur 9 thermostatique serait trop importante pour permettre au deuxième détendeur 59 de fonctionner dans de bonnes conditions.

Le deuxième détendeur 59 disposé sur la branche de dérivation 50 est agencé pour laisser le passage du premier fluide uniquement dans le sens allant de la première vers la deuxième extrémité de la branche de dérivation. Le deuxième détendeur 59 peut être du type détendeur thermostatique ou électronique à section variable. Concernant ce deuxième détendeur, il est entendu par « être agencé pour laisser le passage du premier fluide uniquement dans un sens », le fait que ce deuxième détendeur ne laisse passer le premier fluide uniquement dans un sens au sein de ce circuit primaire, autrement dit dans le contexte spécifique de ce circuit primaire.

Dans le cas d'un deuxième détendeur 59 thermostatique, ce dernier présente une deuxième température de surchauffe à l'évaporateur inférieure à la première température de surchauffe à l'évaporateur du premier détendeur 9. Par exemple, la deuxième température de surchauffe à l'évaporateur du deuxième détendeur 59 peut être de l'ordre de 6 à 8 kelvins. Ce deuxième détendeur 59 thermostatique est muni d'une sonde de température 58 disposée sur la quatrième branche 20 de la deuxième boucle 42, entre l'entrée du compresseur 8 et la troisième voie 21 de la vanne quatre voies 10.

Le compresseur 8, notamment actionné par un moteur électrique, a pour fonction d'élever la pression et la température du premier fluide frigorigène en le comprimant de sorte que, à la sortie du compresseur 8, le fluide est sous forme gazeuse à haute pression et sa température est élevée.

Dans les modes de réalisation représentés sur les figures 1 et 8, les moyens de chauffage comprennent un circuit secondaire 26 à l'intérieur duquel circule un troisième fluide, destiné à chauffer un récepteur de chauffage de l'eau chaude sanitaire comme par exemple un ballon d'eau chaude sanitaire 28. De la sorte, l'échangeur thermique 25 est relié au circuit secondaire 26 à l'intérieur duquel circule le troisième fluide, le circuit secondaire 26 comportant un serpentin 27 immergé dans le ballon d'eau chaude sanitaire 28. De cette manière, le circuit secondaire 26 est conçu pour échanger de la chaleur avec l'eau chaude sanitaire contenue dans le ballon 28 précité.

Selon une première variante de réalisation non représentée, le fluide circulant à l'intérieur du circuit secondaire 26 peut être directement l'eau chaude sanitaire, ce qui signifie que le troisième fluide correspond à l'eau chaude sanitaire. De la sorte, l'échangeur thermique 25 est en relation d'échange thermique direct avec l'eau chaude sanitaire

Selon une deuxième variante de réalisation non représentée, l'échangeur thermique 25 est placé en contact direct ou à l'intérieur du ballon d'eau chaude sanitaire 28, éliminant ainsi le circuit secondaire 26.

Le circuit secondaire 26 est équipé d'une pompe de circulation 29 commandée, disposée entre le serpentin 27 et l'échangeur de chaleur 25.

L'installation comporte en outre un programmateur (non représenté) permettant de commander, notamment en fonction d'un planning prédéterminé, le débit de la pompe de circulation 29.

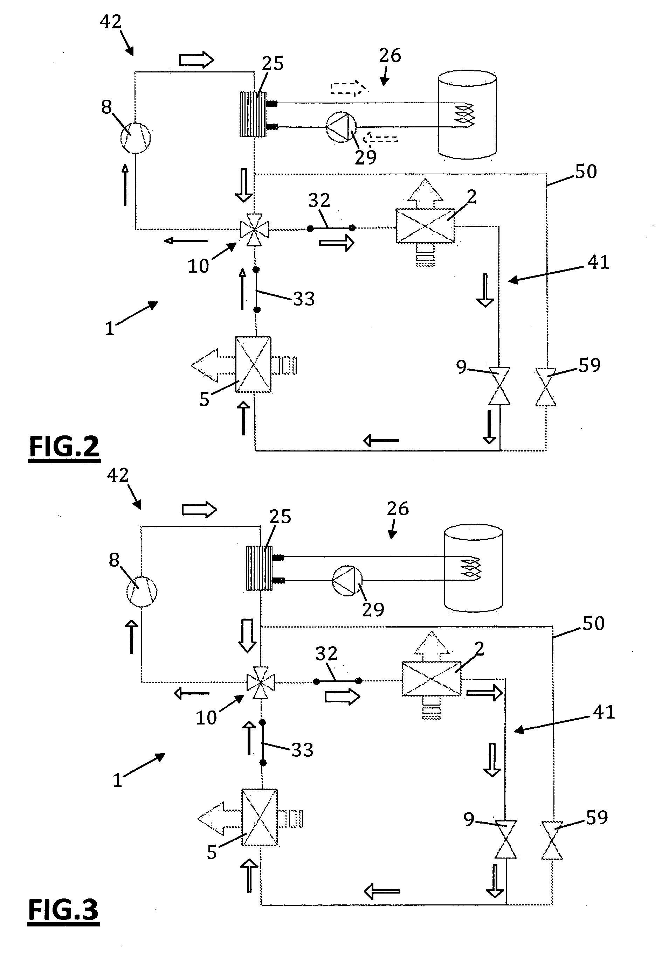

Les différents modes de fonctionnement de l'installation sont décrits ci-après en référence aux figures 2 à 7, dans lesquelles les flux de circulation de fluide dans les circuits primaire 1 et secondaire 26 sont schématisés par des flèches, à savoir des flèches en trait plein pour la circulation du premier fluide et des flèches en trait interrompu pour la circulation du troisième fluide dans le circuit secondaire ; des flèches identiques correspondant à des conditions de température et de pression sensiblement identiques, tandis que des flèches distinctes correspondent à des conditions distinctes de température et/ou de pression.

En figure 2 est illustrée l'installation dans un mode de chauffage de l'air insufflé dans le bâtiment combiné au chauffage de l'eau chaude sanitaire. Dans ce mode de fonctionnement, associé généralement à une période hivernale :
- la vanne quatre voies 10 est commandée de manière à ce que la circulation du premier fluide à l'intérieur de la première boucle 41 se fasse de la seconde voie 15 vers la première voie 13 de la vanne quatre voies 10, ainsi qu'illustré par les flèches ;
- la première vanne 32 et la deuxième vanne 33 sont ouvertes de sorte que le premier fluide circule dans toute la première boucle 41 ;
- la pompe de circulation 29 est en fonctionnement.

Le condenseur/évaporateur 2 fonctionne alors en mode condenseur c'est-à-dire produit de la chaleur. De cette manière, l'air extérieur insufflé dans l'habitation et dont la circulation est indiquée par la flèche 1 en figure 1, est chauffé par le condenseur 2. L'insufflation d'air est assurée par un premier ventilateur 30 disposé dans le circuit d'air 3 correspondant.

L'évaporateur/condenseur 5 fonctionne alors en mode évaporateur, c'est-à-dire rejette du froid. De cette manière, l'air extrait de l'habitation et dont la circulation est indiquée par la flèche E en figure 1, est refroidi par l'évaporateur 5. L'extraction de l'air est assurée par un ventilateur 31 disposé dans le circuit d'air 6 correspondant.

En outre, l'échangeur thermique 25 permet d'échanger de la chaleur entre le premier fluide chaud issu du compresseur 8 et le troisième fluide du circuit secondaire 26. La quantité de chaleur transmise est dépendante du débit du troisième fluide, imposé et commandé par la pompe de circulation 29.

Dans ce mode de fonctionnement, le premier détendeur 9 est actif (ou ouvert) car la différence de température entre la deuxième sonde 92 et la troisième sonde 93 est supérieure à une température de consigne du premier détendeur 9, avec un réglage de la température de surchauffe à l'évaporateur de l'ordre de 4 à 5 kelvins. Par contre, le deuxième détendeur 59, qui lui est réglé avec une température de surchauffe à l'évaporateur de l'ordre de 6 à 8 kelvins, est fermé.

L'invention permet de pouvoir utiliser les calories mises à disposition par l'installation, à la fois pour chauffer l'eau chaude sanitaire, et pour chauffer l'habitation, la proportion entre le chauffage de l'eau chaude sanitaire et de l'habitation étant ajustable en fonction des besoins. Cette double fonction n'est pas assurée une VMC à double flux réversible classique.

Grâce au programmateur, il est possible de régler l'installation de manière à ce que, dans la plage horaire où un occupant n'est pas dans l'habitation, le débit dans le circuit secondaire 26 soit maximal. Dans ce cas, la majorité de la chaleur du premier fluide est transmise à l'eau chaude sanitaire, une faible partie étant transmise à l'air insufflé. L'installation peut alors privilégier la production d'eau chaude sanitaire au détriment du chauffage de l'habitation.

En outre, l'installation peut être équipée d'un capteur de température (non représenté) disposé à l'intérieur du ballon d'eau chaude 28, un asservissement de la pompe de circulation 29 étant alors réalisé en fonction de la température de l'eau chaude sanitaire. Il est ainsi possible de limiter l'échauffement de l'eau chaude sanitaire en cas de surchauffe dans le ballon 28.

A l'inverse, dans la plage horaire où l'occupant est dans l'habitation ou peu de temps avant son arrivée, le programmateur règle un débit minimal, voire nul, de la pompe de circulation 29. Dans ce cas, la majorité de la chaleur du premier fluide du circuit primaire est transmise à l'air insufflé dans l'habitation. L'installation peut privilégier le chauffage de l'habitation au détriment de la production d'eau chaude sanitaire.

En figure 3 est illustrée l'installation dans un mode de chauffage seul de l'air insufflé dans le bâtiment, ce mode étant identique au mode décrit ci-dessus à la différence que la pompe de circulation 29 est à l'arrêt afin de stopper le chauffage de l'eau chaude sanitaire. Les fonctionnements du condenseur/évaporateur 2, de l'évaporateur/condenseur 5, du compresseur 8, de la vanne quatre voies 10, du premier détendeur 9 et du deuxième détendeur 59 restent les mêmes que ceux décrits ci-dessus en référence à la figure 2.

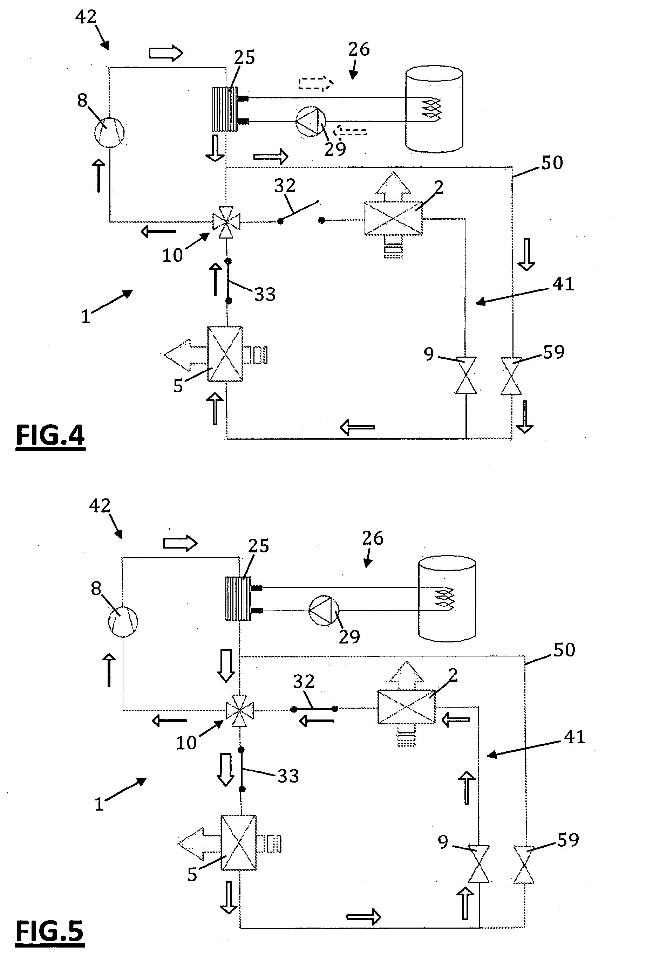

En figure 4 est illustrée l'installation dans un mode de chauffage seul de l'eau chaude sanitaire. Dans ce mode de fonctionnement, généralement associé à une période de mi-saison :
- la vanne quatre voies 10 est réglée de manière à ce que la circulation du premier fluide à l'intérieur de la première boucle 41 se fasse de la seconde voie 15 vers la première voie 13 de la vanne quatre voies 10, ainsi qu'illustré par les flèches, autrement dit dans un sens identique à celui du mode représenté à la figure 2 ;
- la première vanne 32 est fermée de sorte que le premier fluide ne traverse pas le condenseur/évaporateur 2 ;
- la deuxième vanne 33 est ouverte ; et
- la pompe de circulation 29 est à l'arrêt.

Dans ce mode de fonctionnement, l'évaporateur/condenseur 5 fonctionne en mode évaporateur. Toutefois, la première vanne 32 disposée en amont de l'entrée/sortie 16 du condenseur/évaporateur 2 est fermée. Cette dernière empêche donc le premier fluide du circuit primaire 1 de circuler dans le condenseur/évaporateur 2 ; on dit alors que le condenseur/évaporateur 2 est shunté ou contourné.

Le premier détendeur 9 électronique occupe une position débrayée ouverte. Le deuxième détendeur 59 thermostatique, réglé avec une température de surchauffe à l'évaporateur de l'ordre de 6 à 8 kelvins, est ouvert, de sorte que le premier fluide circule dans la branche de dérivation 50 via le deuxième détendeur 59 en direction de l'évaporateur 5 sans passer par le premier détendeur 9, ainsi qu'illustré par les flèches.

Dans le cas où le deuxième détendeur 9 serait du type électronique, on pourrait imposer, dans ce mode de fonctionnement, un réglage de la température de surchauffe à l'évaporateur à environ 5 kelvins, ce qui augmenterait le rendement de l'installation par rapport au cas où le deuxième détendeur 9 est du type thermostatique.

De cette manière, l'ensemble de la chaleur du premier fluide est transmis à l'eau chaude sanitaire, par l'intermédiaire de l'échangeur thermique 25 et du circuit secondaire 26. De même que précédemment, la quantité de chaleur transmise et, par conséquent, la température de l'eau chaude sanitaire, peut être régulée par la commande de la pompe de circulation 29.

Ainsi, dans ce mode de fonctionnement, l'installation évite le chauffage ou le refroidissement de la pièce et permet de produire uniquement de l'eau chaude sanitaire.

En outre, comme le deuxième détendeur 9 est actif/ouvert, le condenseur/évaporateur 2 shunté voit sa sortie/entrée 18 mise sous basse-pression, de sorte que ce condenseur/évaporateur 2 provoque peu ou pas d'aspiration de premier fluide frigorigène, permettant ainsi de limiter la charge de fluide frigorigène dans le circuit primaire 1.

En figure 5 est illustrée l'installation dans un mode de refroidissement seul de l'air insufflé dans le bâtiment. Dans ce mode de fonctionnement, généralement associé à une période estivale :
- la vanne quatre voies 10 est réglée de manière à ce que la circulation du premier fluide à l'intérieur de la première boucle 41 se fasse de la première voie 13 vers la seconde voie 15 de la vanne quatre voies 10, ainsi qu'illustré par les flèches, autrement dit dans un sens opposé à celui du mode représenté à la figure 2 ;
- la première vanne 32 et la deuxième vanne 33 sont ouvertes de sorte que le premier fluide circule dans toute la première boucle 41 ;
- la pompe de circulation 29 est à l'arrêt.

Le sens de circulation du premier fluide reste inchangé dans la deuxième boucle 42 par rapport aux modes décrits ci-dessus en référence aux figures 2 à 4.

L'installation fonctionne ainsi en mode réversible, dans lequel le condenseur/évaporateur 2 fonctionne alors en mode évaporateur c'est-à-dire produit du froid. De cette manière, l'air extérieur insufflé dans l'habitation et dont la circulation est indiquée par la flèche I en figure 1, est refroidi par l'évaporateur 2.

De même, l'évaporateur/condenseur 5 fonctionne alors en mode condenseur, c'est-à-dire rejette de la chaleur. De cette manière, l'air extrait de l'habitation et dont la circulation est indiquée par la flèche E en figure 1, est chauffé par le condenseur 5.

Dans ce mode de fonctionnement, le premier détendeur 9 est actif (ou ouvert) car la différence de température entre la première sonde 91 et la troisième sonde 93 est supérieure à une température de consigne du premier détendeur 9, avec un réglage de la température de surchauffe à l'évaporateur de l'ordre de 4 à 5 kelvins. Par contre, le deuxième détendeur 59, qui lui est réglé avec une température de surchauffe à l'évaporateur de l'ordre de 6 à 8 kelvins, est fermé.

En figure 6 est illustrée l'installation dans un mode de refroidissement de l'air insufflé dans le bâtiment combiné au chauffage de l'eau chaude sanitaire avec priorité au refroidissement de l'air insufflé. Dans ce mode de fonctionnement, généralement associé à une période estivale :
- la vanne quatre voies 10 est réglée de manière à ce que la circulation du premier fluide à l'intérieur de la première boucle 41 se fasse de la première voie 13 vers la seconde voie 15 de la vanne quatre voies 10, ainsi qu'illustré par les flèches, autrement dit dans un sens identique à celui du mode représenté à la figure 5 ;
- la première vanne 32 et la deuxième vanne 33 sont ouvertes de sorte que le premier fluide circule dans toute la première boucle 41 ;
- la pompe de circulation 29 est en fonctionnement.

Tout comme pour le mode décrit ci-dessus en référence à la figure 5 , l'installation fonctionne en mode réversible, dans lequel le condenseur/évaporateur 2 fonctionne alors en mode évaporateur c'est-à-dire produit du froid. De cette manière, l'air extérieur insufflé dans l'habitation et dont la circulation est indiquée par la flèche I en figure 1, est refroidi par l'évaporateur 2.

De même, l'évaporateur/condenseur 5 fonctionne alors en mode condenseur, c'est-à-dire rejette de la chaleur. De cette manière, l'air extrait de l'habitation et dont la circulation est indiquée par la flèche E en figure 1, est chauffé par le condenseur 5.

Toutefois, la chaleur ainsi perdue est limitée car une partie importante de la chaleur disponible a été préalablement utilisée pour produire de l'eau chaude sanitaire par l'intermédiaire de l'échangeur thermique 25 et du circuit secondaire 26. De même que précédemment, la quantité de chaleur transmise et, par conséquent, la température de l'eau chaude sanitaire, peut être régulée par la commande de la pompe de circulation 29.

Dans ce mode de fonctionnement, l'installation produit du rafraîchissement pour refroidir l'intérieur du bâtiment et en même temps elle produit du chauffage pour l'eau chaude sanitaire. De la sorte, une priorité est accordée au refroidissement de l'air insufflé car le cycle condensation/évaporation est totalement mis en oeuvre dans la première boucle 41, avec le condenseur/évaporateur 2 sollicité en mode évaporateur et l'évaporateur/condenseur 5 sollicité en mode condenseur.

Dans ce mode de fonctionnement, le premier détendeur 9 est actif (ou ouvert) car la différence de température entre la première sonde 91 et la troisième sonde 93 est supérieure à une température de consigne du premier détendeur 9, avec un réglage de la température de surchauffe à l'évaporateur de l'ordre de 4 à 5 kelvins. Par contre, le deuxième détendeur 59, qui lui est réglé avec une température de surchauffe à l'évaporateur de l'ordre de 6 à 8 kelvins, est fermé.

En figure 7 est illustrée l'installation dans un mode de refroidissement de l'air insufflé dans le bâtiment combiné au chauffage de l'eau chaude sanitaire avec priorité au chauffage de l'eau chaude sanitaire. Dans ce mode de fonctionnement, généralement associé à une période estivale :
- la vanne quatre voies 10 est réglée de manière à ce que la circulation du premier fluide à l'intérieur de la première boucle 41 se fasse de la première voie 13 vers la seconde voie 15 de la vanne quatre voies 10, ainsi qu'illustré par les flèches, autrement dit dans un sens identique à celui du mode représenté à la figure 5 ou 6 ;
- la première vanne 32 est ouverte ;
- la deuxième vanne 33 est fermée de sorte que le premier fluide ne traverse pas l'évaporateur/condenseur 5 ; et
- la pompe de circulation 29 est en fonctionnement.

Tout comme pour le mode décrit ci-dessus en référence à la figure 5 ou 6, l'installation fonctionne en mode réversible, dans lequel le condenseur/évaporateur 2 fonctionne en mode évaporateur c'est-à-dire produit du froid. De cette manière, l'air extérieur insufflé dans l'habitation et dont la circulation est indiquée par la flèche I en figure 1, est refroidi par l'évaporateur 2. De même que précédemment, l'échangeur thermique 25 permet d'échanger de la chaleur entre le premier fluide chaud issu du compresseur 8 et le troisième fluide du circuit secondaire 26, le débit de la pompe de circulation 29 étant réglable en fonction des besoins.

Toutefois, la deuxième vanne 32 disposée en amont de la sortie/entrée de l'évaporateur/condenseur 5 est fermée. Cette dernière empêche donc le premier fluide du circuit primaire 1 de circuler dans l'évaporateur/condenseur 5 ; on dit alors que l'évaporateur/condenseur 5 est shunté ou contourné.

Le premier détendeur 9 électronique occupe une position débrayée ouverte. Le deuxième détendeur 59 thermostatique, réglé avec une température de surchauffe à l'évaporateur de l'ordre de 6 à 8 kelvins, est ouvert.

Dans le cas où le deuxième détendeur 59 serait du type électronique, on pourrait imposer, dans ce mode de fonctionnement, un réglage de la température de surchauffe à l'évaporateur à environ 5 kelvins, ce qui augmenterait le rendement de l'installation par rapport au cas où le deuxième détendeur 59 est du type thermostatique.

En conséquence, le premier fluide circule dans la branche de dérivation 50 via le deuxième détendeur 59 en direction du condenseur/évaporateur 2 via le premier détendeur 9 ouvert, ainsi qu'illustré par les flèches. Autrement dit, le premier fluide circule dans la branche de dérivation 50, traverse le deuxième détendeur 59 ouvert, rejoint la troisième branche 17 de la première boucle 41, traverse le premier détendeur 9 avant de circuler à travers le condenseur/évaporateur 2.

Dans ce mode de fonctionnement, l'évaporateur/condenseur 5 n'est pas sollicité en mode condenseur de sorte que, lorsque l'installation produit de la chaleur pour chauffer l'eau chaude sanitaire par l'intermédiaire de l'échangeur thermique 25 et du circuit secondaire 26, l'installation récupère de l'énergie fournie par l'évaporateur 2 pour refroidir le logement. De la sorte, une priorité est accordée au chauffage de l'eau chaude sanitaire car la production de froid (pour le rafraîchissement de l'air insufflé dans le bâtiment) est limitée à la production de chaleur pour le chauffage de l'eau chaude sanitaire.

En outre, comme le deuxième détendeur 9 est actif/ouvert, l'évaporateur/condenseur 5 shunté voit son entrée/sortie 19 mise sous basse-pression, de sorte que cet évaporateur/condenseur 5 provoque peu ou pas d'aspiration de premier fluide frigorigène, permettant ainsi de limiter la charge de fluide frigorigène dans le circuit primaire 1.

L'invention permet ainsi de réaliser tous les modes de fonctionnement décrit ci-dessus.

Selon une possibilité de l'invention applicable à chacun des modes de fonctionnement, l'air insufflé est un mélange d'air issu de l'extérieur de l'habitation et d'air issu de l'intérieur, et l'air extrait est un mélange d'air issu de l'intérieur de l'habitation et d'air issu de l'extérieur.

Comme il va de soi, la présente invention ne se limite pas à la seule forme d'exécution de cette installation ; elle en embrasse, au contraire, toutes les variantes de réalisation et d'application respectant le même principe. C'est ainsi notamment que le compresseur peut ou non être placé dans la veine d'air correspondant au circuit d'insufflation d'air, de manière à utiliser la chaleur émise par la compresseur en cours de fonctionnement.

## Revendications

1. Installation de ventilation mécanique contrôlée de type double flux thermodynamique réversible, comportant un circuit primaire (1) de circulation d'un premier fluide présentant une première (41) et une deuxième (42) boucles reliées entre elles par une vanne quatre voies (10) d'inversion de cycle permettant de diriger le premier fluide dans un sens ou dans l'autre à l'intérieur de la première boucle (41) du circuit primaire (1), dans laquelle :
- la première boucle (41) est équipée d'un condenseur/évaporateur (2) échangeant de la chaleur avec un circuit d'insufflation d'air (3), destiné à l'insufflation d'air à l'intérieur (4) d'un bâtiment, d'un premier détendeur (9) du type bidirectionnel agencé pour laisser le passage du premier fluide dans les deux sens de circulation de la première boucle (41), d'une première vanne (32) disposée entre la vanne quatre voies (10) et le condenseur/évaporateur (2), et d'un évaporateur/condenseur (5) échangeant de la chaleur avec un circuit d'extraction d'air (6), destiné à l'extraction d'air du bâtiment vers l'extérieur (7), disposé entre le premier détendeur (9) et la vanne quatre voies (10) ;
- la deuxième boucle (42) est équipée d'un compresseur (8) et d'un échangeur thermique (25) disposé entre la sortie du compresseur (8) et la vanne quatre voies (10), l'échangeur thermique (25) étant destiné à être relié à des moyens de chauffage (26) d'un second fluide, notamment d'eau chaude sanitaire,
ladite installation étant **caractérisée en ce qu'**elle comprend en outre :
- une deuxième vanne (33) disposée sur la première boucle (41) du circuit primaire (1) entre l'évaporateur/condenseur (5) et la vanne quatre voies (10) ;
- une branche de dérivation (50) comportant une première extrémité raccordée à la deuxième boucle (42), entre la sortie de l'échangeur thermique (25) et la vanne quatre voies (10), et une seconde extrémité raccordée à la première boucle (41), entre le premier détendeur (9) et l'évaporateur/condenseur (5) ; et
- un deuxième détendeur (59) disposé sur la branche de dérivation (50), ledit deuxième détendeur (59) étant agencé pour laisser le passage du premier fluide uniquement dans le sens allant de la première vers la deuxième extrémité de la branche de dérivation (50).

2. Installation selon la revendication 1, **caractérisée en ce que** le premier détendeur (9) et le deuxième détendeur (59) sont conçus pour que :
- lorsque la première (32) et la deuxième (33) vannes sont ouvertes, le premier détendeur (9) est ouvert et le deuxième détendeur (59) est fermé de sorte que le premier fluide circule dans la première boucle (41) via le premier détendeur (9) ;
- lorsque la première vanne (32) est fermée et la deuxième vanne (33) est ouverte, le premier détendeur (9) est ouvert et le deuxième détendeur (59) est ouvert de sorte que le premier fluide circule dans la branche de dérivation (50) via le deuxième détendeur (59) en direction de l'évaporateur/condenseur (5) sans passer par le premier détendeur (9) ;
- lorsque la première vanne (32) est ouverte et la deuxième vanne (33) est fermée, le premier détendeur (9) est ouvert et le deuxième détendeur (59) est ouvert de sorte que le premier fluide circule dans la branche de dérivation (50) via le deuxième détendeur (59) en direction du condenseur/évaporateur (2) via le premier détendeur (9).

3. Installation selon l'une des revendications 1 à 2, **caractérisée en ce que** le premier détendeur (9) est du type détendeur électronique à section variable.

4. Installation selon l'une des revendications 1 à 3, **caractérisée en ce que** le premier détendeur (9) est du type détendeur débrayable conçu pour être commandé dans une position débrayée ouverte.

5. Installation selon l'une des revendications 1 à 4, **caractérisée en ce que** le premier détendeur (9) est muni de trois sondes de température, à savoir une première sonde (91) disposée sur la première boucle (41) entre le condenseur/évaporateur (2) et le premier détendeur (9), une deuxième sonde (92) disposée sur la première boucle (41) entre le premier détendeur (9) et l'évaporateur/condenseur (5), et une troisième sonde (93) disposée sur la deuxième boucle (42) entre l'entrée du compresseur (8) et la vanne quatre voies (10).

6. Installation selon l'une quelconque des revendications 1 à 2, **caractérisée en ce que** le premier détendeur (9) est du type détendeur thermostatique, et **en ce que** l'installation comprend un troisième détendeur (52) du type détendeur thermostatique équipant une sous-branche de dérivation (51) reliant la branche de dérivation (50) à la première boucle (41) entre le premier détendeur (9) et le condenseur/évaporateur (2).

7. Installation selon l'une des revendications 1 à 6, **caractérisée en ce que** le deuxième détendeur (59) est du type détendeur thermostatique à section variable.

8. Installation selon l'une des revendications 1 à 6, **caractérisée en ce que** le deuxième détendeur (59) est du type détendeur électronique à section variable.

9. Installation selon l'une des revendications 1 à 8, **caractérisée en ce que** le deuxième détendeur (59) est muni d'au moins une sonde de température (58) disposée sur la deuxième boucle (42) entre l'entrée du compresseur (8) et la vanne quatre voies (10).

10. Installation selon l'une des revendications 1 à 9, **caractérisée en ce que** le premier détendeur (9) présente une première température de surchauffe à l'évaporateur et le deuxième détendeur (59) présente une deuxième température de surchauffe à l'évaporateur, et **en ce que** la première température de surchauffe à l'évaporateur est inférieure à la deuxième température de surchauffe à l'évaporateur.

11. Installation selon la revendication 10, dans laquelle la première température de surchauffe à l'évaporateur est de l'ordre de 4 à 5 kelvins et la deuxième température de surchauffe à l'évaporateur est de l'ordre de 6 à 8 kelvins.

## Patentansprüche

1. Gesteuerte mechanische Belüftungsanlage des Typs mit umkehrbarem thermodynamischem Doppelstrom, die einen Primärkreislauf (1) zur Zirkulation eines ersten Fluids umfasst, der eine erste (41) und eine zweite (42) Schleife aufweist, die miteinander durch ein Umkehr-Vierwegeventil (10) verbunden sind, das es erlaubt, das erste Fluid im Inneren der ersten Schleife (41) des Hauptkreislaufs (1) in die eine Richtung oder die andere Richtung zu lenken, wobei:
- die erste Schleife (41) mit einem Kondensator/Verdampfer (2) ausgestattet ist, der Wärme mit einem Lufteinblaskreislauf (3) austauscht, der zum Einblasen von Luft in das Innere (4) eines Gebäudes bestimmt ist, mit einem ersten Druckminderer (9) des bidirektionalen Typs, der eingerichtet ist, um die Passage des ersten Fluids in die zwei Zirkulationsrichtungen der ersten Schleife (41) zu lassen, mit einem ersten Ventil (32), das zwischen dem Umkehr-Vierwegeventil (10) und dem Kondensator/Verdampfer (2) angeordnet ist, und mit einem Verdampfer/Kondensator (5), der Wärme mit einem Luftextraktionskreislauf (6) austauscht, der zur Extraktion von Luft aus dem Gebäude ins Freie (7) bestimmt ist, der zwischen dem ersten Druckminderer (9) und dem Umkehr-Vierwegeventil (10) angeordnet ist,
- wobei die zweite Schleife (42) mit einem Kompressor (8) und mit einem Wärmeaustauscher (25), der zwischen dem Ausgang des Kompressors (8) und dem Umkehr-Vierwegeventil (10) angeordnet ist, ausgestattet ist, wobei der Wärmeaustauscher (25) dazu bestimmt ist, mit Heizmitteln (26) eines zweiten Fluids, insbesondere Warmbrauchwasser, verbunden zu sein,
Anlage **dadurch gekennzeichnet, dass** sie ferner Folgendes umfasst:
- ein zweites Ventil (33), das auf der ersten Schleife (41) des Primärkreislaufs (1) zwischen dem Verdampfer/Kondensator (5) und dem Umkehr-Vierwegeventil (10) angeordnet ist,
- eine Abzweigung (50), die ein erstes Ende umfasst, das an die zweite Schleife (42) zwischen dem Ausgang des Wärmeaustauschers (25) und dem Umkehr-Vierwegeventil (10) angeschlossen ist, und ein zweites Ende, das an die erste Schleife (41) zwischen dem ersten Druckminderer (9) und dem Verdampfer/Kondensator (5) angeschlossen ist, und
- einen zweiten Druckminderer (59), der auf der Abzweigung (50) angeordnet ist, wobei der zweite Druckminderer (59) eingerichtet ist, um die Passage des ersten Fluids nur in die Richtung zu lassen, die von dem ersten zu dem zweiten Ende der Abzweigung (50) läuft.

2. Anlage nach Anspruch 1, **dadurch gekennzeichnet, dass** der erste Druckminderer (9) und der zweite Druckminderer (59) konzipiert sind, um:
- wenn das erste (32) und das zweite (33) Ventil offen sind, der erste Druckminderer (9) offen ist und der zweite Druckminderer (59) derart geschlossen ist, dass das erste Fluid in der ersten Schleife (41) über den ersten Druckminderer (9) zirkuliert,
- wenn das erste Ventil (32) geschlossen ist und das zweite Ventil (33) offen ist, der erste Druckminderer (9) offen ist und der zweite Druckminderer (59) derart offen ist, dass das erste Fluid in der Abzweigung (50) über den zweiten Druckminderer (59) in Richtung des Verdampfers/Kondensators (5) zirkuliert, ohne durch den ersten Druckminderer (9) zu laufen,
- wenn das erste Ventil (32) offen ist und das zweite Ventil (33) geschlossen ist, der erste Druckminderer (9) offen ist und der zweite Druckminderer (59) derart offen ist, dass das erste Fluid in der Abzweigung (50) über den zweiten Druckminderer (59) in Richtung des Kondensators/Verdampfers (2) über den ersten Druckminderer (9) läuft.

3. Anlage nach einem der Ansprüche 1 bis 2, **dadurch gekennzeichnet, dass** der erste Druckminderer (9) des Typs elektronischer Druckminderer mit variablem Querschnitt ist.

4. Anlage nach einem der Ansprüche 1 bis 3, **dadurch gekennzeichnet, dass** der erste Druckminderer (9) des Typs auskuppelbarer Druckminderer ist, der konzipiert ist, um in eine offene ausgekuppelte Position gesteuert zu werden.

5. Anlage nach einem der Ansprüche 1 bis 4, **dadurch gekennzeichnet, dass** der erste Druckminderer (9) mit drei Temperatursonden versehen ist, nämlich mit einer ersten Sonde (91), die auf der ersten Schleife (41) zwischen dem Kondensator/Verdampfer (2) und dem ersten Druckminderer (9) angeordnet ist, mit einer zweiten Sonde (92), die auf der ersten Schleife (41) zwischen dem ersten Druckminderer (9) und dem Verdampfer/Kondensator (5) angeordnet ist, und mit einer dritten Sonde (93), die auf der zweiten Schleife (42) zwischen dem Eingang des Kompressors (8) und dem Umkehr-Vierwegeventil (10) angeordnet ist.

6. Anlage nach einem der Ansprüche 1 bis 2, **dadurch gekennzeichnet, dass** der erste Druckminderer (9) des Typs Thermostat-Druckminderer ist, und dass die Anlage einen dritten Druckminderer (52) des Typs Thermostat-Druckminderer umfasst, der eine Unterabzweigung (51) ausstattet, die die Abzweigung (50) mit der ersten Schleife (41) zwischen dem ersten Druckminderer (9) und dem Kondensator/Verdampfer (2) verbindet.

7. Anlage nach einem der Ansprüche 1 bis 6, **dadurch gekennzeichnet, dass** der zweite Druckminderer (59) des Typs Thermostat-Druckminderer mit variablem Querschnitt ist.

8. Anlage nach einem der Ansprüche 1 bis 6, **dadurch gekennzeichnet, dass** der zweite Druckminderer (59) des Typs elektronischer Druckminderer mit variablem Querschnitt ist.

9. Anlage nach einem der Ansprüche 1 bis 8, **dadurch gekennzeichnet, dass** der zweite Druckminderer (59) mit mindestens einer Temperatursonde (58) versehen ist, die auf der zweiten Schleife (42) zwischen dem Eingang des Kompressors (8) und dem Umkehr-Vierwegeventil (10) angeordnet ist.

10. Anlage nach einem der Ansprüche 1 bis 9, **dadurch gekennzeichnet, dass** der erste Druckminderer (9) eine erste Überhitzungstemperatur an dem Verdampfer aufweist und der zweite Druckminderer (59) eine zweite Überhitzungstemperatur an dem Druckminderer aufweist, und dass die erste Überhitzungstemperatur an dem Verdampfer niedriger ist als die zweite Überhitzungstemperatur an dem Verdampfer.

11. Anlage nach Anspruch 10, wobei die erste Überhitzungstemperatur an dem Verdampfer in der Größenordnung von 4 bis 5 Kelvin liegt und die zweite Überhitzungstemperatur an dem Verdampfer in der Größenordnung von 6 bis 8 Kelvin liegt.

## Claims

1. A controlled mechanical ventilation installation of reversible dual flow thermodynamic type, including a primary circuit (1) for the circulation of a first fluid having a first (41) and a second (42) loop connected to each other by a cycle-reversing four-way valve (10) allowing to direct the first fluid in one direction or the other inside the first loop (41) of the primary circuit (1), in which:
- the first loop (41) is equipped with a condenser/evaporator (2) exchanging heat with an air blowing circuit (3), intended to blow air inside (4) a building, of a first pressure reducer (9) of the dual direction type arranged to let the first fluid pass in the two circulation directions of the first loop (41), of a first valve (32) disposed between the four-way valve (10) and the condenser/evaporator (2), and an evaporator/condenser (5) exchanging heat with an air extraction circuit (6), intended for extracting air from the building towards the outside (7), disposed between the first pressure reducer (9) and the four-way valve (10);
- the second loop (42) is equipped with a compressor (8) and a heat exchanger (25) disposed between the outlet of the compressor (8) and the four-way valve (10), the heat exchanger (25) being intended to be connected to means (26) for heating a second fluid, in particular domestic hot water,
said installation being **characterized in that** it further comprises:
- a second valve (33) disposed on the first loop (41) of the primary circuit (1) between the evaporator/condenser (5) and the four-way valve (10);
- a diverting branch (50) including a first end joined to the second loop (42), between the exit of the heat exchanger (25) and the four-way valve (10), and a second end joined to the first loop (41), between the first pressure reducer (9) and the evaporator/condenser (5); and
- a second pressure reducer (59) disposed on the diverting branch (50), said second pressure reducer (59) being arranged to let the first fluid pass only in the direction going from the first towards the second end of the diverting branch (50).

2. The installation according to claim 1, **characterized in that** the first pressure reducer (9) and the second pressure reducer (59) are designed so that:
- when the first (32) and second (33) valves are open, the first pressure reducer (9) is open and the second pressure reducer (59) is closed such that the first fluid circulates in the first loop (41) via the first pressure reducer (9):
- when the first valve (32) is closed and the second valve (33) is open, the first pressure reducer (9) is open and the second pressure reducer (59) is open such that the first fluid circulates in the diverting branch (50) via the second pressure reducer (59) in the direction of the evaporator/condenser (5) without passing via the first pressure reducer (9);
- when the first valve (32) is open and the second valve (33) is closed, the first pressure reducer (9) is open and the second pressure reducer (59) is open such that the first fluid circulates in the diverting branch (50) via the second pressure reducer (59) in the direction of the condenser/evaporator (2) via the first pressure reducer (9).

3. The installation according to any of claims 1 to 2, **characterized in that** the first pressure reducer (9) is of the electronic pressure reducer type with a variable section.

4. The installation according to any of claims 1 to 3, **characterized in that** the first pressure reducer (9) is of the type declutchable pressure reducer designed for being controlled in an open declutched position.

5. The installation according to any of claims 1 to 4, **characterized in that** the first pressure reducer (9) is provided with three temperature probes, namely a first probe (91) disposed on the first loop (41) between the condenser/evaporator (2) and the first pressure reducer (9), a second probe (92) disposed on the first loop (41) between the first pressure reducer (9) and the evaporator/condenser (5), and a third probe (93) disposed on the second loop (42) between the inlet of the compressor (8) and the four-way valve (10).

6. The installation according to any one of claims 1 to 2, **characterized in that** the first pressure reducer (9) is of the thermostatic pressure reducer type, and **in that** the installation comprises a third pressure reducer (52) of thermostatic pressure reducer type equipping a diverting sub-branch (51) connecting the diverting branch (50) to the first loop (41) between the first pressure reducer (9) and the condenser/evaporator (2).

7. The installation according to any of claims 1 to 6, **characterized in that** the second pressure reducer (59) is of the thermostatic pressure reducer type with variable section.

8. The installation according to any of claims 1 to 6, **characterized in that** the second pressure reducer (59) is of the electronic pressure reducer type with a variable section.

9. The installation according to any of claims 1 to 8, **characterized in that** the second pressure reducer (59) is provided with at least one temperature probe (58) disposed on the second loop (42) between the inlet of the compressor (8) and the four-way valve (10).

10. The installation according to any of claims 1 to 9, **characterized in that** the first pressure reducer (9) has a first overheating temperature in the evaporator and the second pressure reducer (59) has a second overheating temperature in the evaporator, and **in that** the first overheating temperature in the evaporator is lower than the second overheating temperature in the evaporator.

11. The installation according to claim 10, wherein the first overheating temperature in the evaporator is of the order of 4 to 5 kelvins and the second overheating temperature in the evaporator is of the order of 6 to 8 kelvins.
